# EUROPEAN PATENT APPLICATION

(11) **EP 3 680 875 A1**
(43) Date of publication of application: **15.07.2020**
(21) Application number: 19861283.0
(22) Date of filing: 29.07.2019
(51) Int. Cl.: G08G 1/00, G08G 1/04, G06Q 50/10, G06Q 40/08

(54) **PROGRAM AND INFORMATION PROCESSING METHOD**

(30) Priority: 18.10.2018 JP 2018196997
(71) Applicant: Aioi Nissay Dowa Insurance Co., Ltd., Shibuya-ku Tokyo 1508488 (JP)
(72) Inventor: KURODA, Masami, Tokyo 1508488 (JP); NUMATA, Toshihiko, Tokyo 1508488 (JP); IWATA, Takashi, Tokyo 1508488 (JP)
(74) Representative: Zacco Sweden AB
(86) International application number: PCT/JP2019/029688
(87) International publication number: WO 2020/079916

(57) **Abstract**

A program causes an information processing apparatus to perform processing to receive a plurality of data used to determine an accident situation, perform display control to display a determination screen on a display device on the basis of the plurality of data, the determination screen including a first display area in which a plurality of determination items and determination results for determining the accident situation are displayed and a second display area in which proof data is displayed in determination items having the proof data corresponding to the determination results, receive an instruction based on a user operation performed on a prescribed determination result inside the first display area, and perform display control to display proof data for the prescribed determination result inside the second display area according to the instruction.

## Description

### Technical Field

The present invention relates to a program and an information processing method caused to be performed by an information processing apparatus.

### Background Art

Generally, when an automobile causes an accident, an emergency report is issued to all parties concerned and various data is stored to grasp an accident situation. Further, after that, a negligence rate is evaluated by insurance companies with which respective parties concerned hold a contract on the basis of verbal evidence by the parties concerned and witnesses or the stored data to pay insurance.

For example, Patent Literature 1 discloses a vehicle emergency ordinary system in which an emergency report device installed in an accident vehicle is constituted by a GPS reception unit, a gyro, a vehicle speed sensor, a collision sensor, and a public mobile phone (wireless machine), and in which the emergency report device accumulates vehicle speed information every change in vehicle speed or at regular time intervals besides calculating a vehicle position and transmits scene position information and vehicle speed information to an emergency center through data communication at the occurrence of an accident. The emergency center includes means for displaying a received scene position and a traveling locus on a map in a superposed state, and displays traveling locus marks separated by color at several stages according to the vehicle speed information on a map in a superposed state when displaying a traveling locus.

Patent Literature 2 discloses a drive recorder device system including a drive recorder device installed in a vehicle and a vehicle management center that collects data from the drive recorder device via a communication line. In Patent Literature 2, a drive recorder device is installed in a vehicle including a road-to-vehicle communication machine that performs wireless communication with a road side machine that is installed at an intersection or the like with a traffic signal and acquires lighting information on the traffic signal, and the lighting information is also recorded on a data recording unit of the drive recorder device as traveling record data on the basis of the reception of the lighting information by the road-to-vehicle communication machine, whereby it is possible to make a negligence rate of a driver of the vehicle getting involved in a traffic accident clear.

Patent Literature 3 discloses an insurance company system that receives a report of an automobile accident between automobiles, the report including a negligence rate of an insured person. It is described in Patent Literature 3 that a charged person of an insurance company may calculate and input a negligence rate of an accident by referring to a case database, a law database of a court, or the like.

Patent Literature 4 discloses a digital video camera negligence rate evaluation system in which accident pattern analysis data is generated on the basis of image information on an accident recorded by a digital video camera, and in which the data is checked against a database obtained by compiling past negligence rate laws into data to perform negligence rate evaluation. Patent Literature 4 discloses a technology to determine a basic negligence rate on the basis of accident pattern analysis data and various data (such as collided party object data and accident scene road structure data) on past negligence rate laws and determine negligence rate evaluation on the basis of correction element data.

### Citation List

### Patent Document

Patent Document 1: Patent Publication JP-A-2000-285377
Patent Document 2: Japanese Patent No. 5533626
Patent Document 3: Patent Publication JP-A-2011-204116
Patent Document 4: Patent Publication JP-A-2001-347972

### Summary

### Technical Problem

Since an automobile accident is caused when many factors are complicatedly tangled with each other, it is necessary to grasp an accident situation and determine whether to pay insurance on the basis of objective facts. Further, it is necessary to determine a negligence rate according to past cases and laws on the basis of an accident situation capable of being objectively confirmed. Therefore, even when an accident situation is grasped by a system or even when a negligence rate is automatically determined on the basis of the accident situation, it is important to objectively grasp whether grounds (such as a factor and the proof of an accident) for grasping the accident situation are appropriate.

The present invention has been made in view of the above circumstances and has an object to providing a program and an information processing method that visualize an accident situation in an automobile accident to make it possible to objectively and easily confirm an occurrence factor or the like.

### Solution to Problem

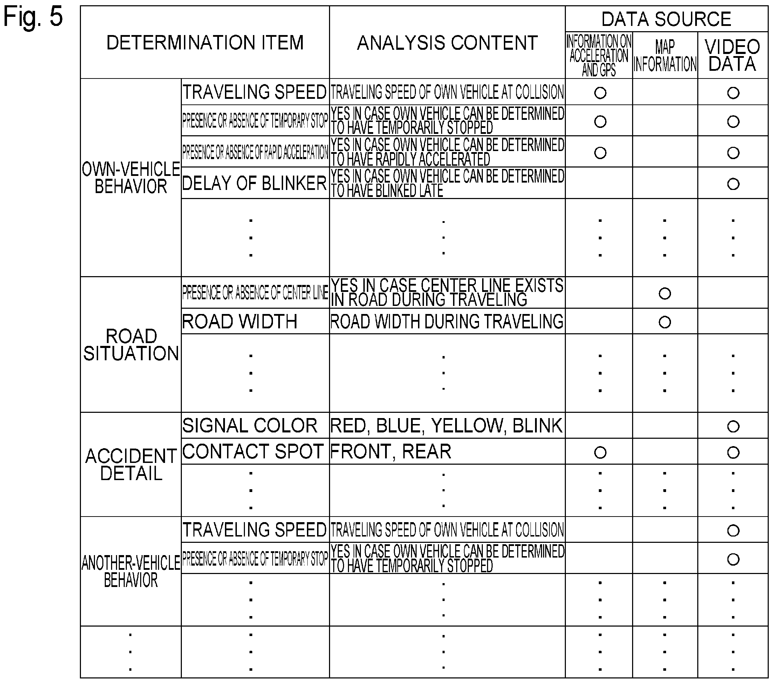

A program according to an aspect of the present invention causes an information processing apparatus to perform processing to receive a plurality of data used to determine an accident situation, perform display control to display a determination screen on a display device on the basis of the plurality of data, the determination screen including a first display area in which a plurality of determination items and determination results for determining the accident situation (items illustrated in Fig. 5) are displayed and a second display area in which proof data is displayed in determination items having the proof data corresponding to the determination results, receive an instruction based on a user operation performed on a prescribed determination result inside the first display area, and perform display control to display proof data for the prescribed determination result inside the second display area according to the instruction.

When the proof data includes a moving image captured by an imaging device installed in a vehicle, the program may cause the information processing apparatus to further perform processing to perform display control to display a still image that is a part of the moving image in association with the determination items.

The program may cause the information processing apparatus to further perform processing to receive a second instruction based on a user operation performed on a prescribed still image inside the second display area, and perform display control to display a reproduction screen to reproduce a moving image corresponding to the prescribed still image according to the second instruction.

In the program, the moving image may be different between the determination items.

In the program, spots associated with the determination results may be highlighted inside the moving image.

When the determination items include an item showing a contact spot of an own vehicle at collision, the program may cause the information processing apparatus to further perform processing to receive a third instruction based on a user operation performed on the item showing the contact spot, and perform display control to display the vehicle to be superposed on a clock, display a front of the vehicle in a 12 o'clock direction, and display the contact spot on the vehicle according to the third instruction.

The program causes the information processing apparatus to further perform processing to perform display control to display a third display area in which a basic negligence rate determined using the plurality of data and data standardized on the basis of past law data or law is displayed on the determination screen together with a prescribed user interface (UI) component for displaying the law data, receive a fourth instruction based on a user operation performed on the prescribed UI component, and perform display control to display law data used to determine the basic negligence rate according to the fourth instruction.

The program may cause the information processing apparatus to further perform processing to perform display control to display a fourth display area in which map data for explaining the accident situation determined on the basis of the plurality of data is displayed on the determination screen.

The program may cause the information processing apparatus to further perform processing to receive a fifth instruction based on a user operation to correct the determination results, and reflect the correction of the determination results according to the fifth instruction.

An information processing method according to another aspect of the present invention includes the steps of: receiving a plurality of data used to determine an accident situation; performing display control to display a determination screen on a display device on the basis of the plurality of data, the determination screen including a first display area in which a plurality of determination items and determination results for determining the accident situation are displayed and a second display area in which proof data is displayed in determination items having the proof data corresponding to the determination results; receiving an instruction based on a user operation performed on a prescribed determination result inside the first display area; and performing display control to display proof data for the prescribed determination result inside the second display area according to the instruction.

### Advantageous Effects of Invention

According to the present invention, it is possible for a user to objectively and easily confirm grounds for determining an accident situation in an automobile accident.

### Brief Description of Drawings

Fig. 1 is a diagram showing the schematic configuration of an accident handling system according to an embodiment of the present invention.
Fig. 2 is a diagram showing the schematic configuration of an accident detection server according to the embodiment of the present invention.
Fig. 3 is a diagram showing the schematic configuration of an accident situation grasping server according to the embodiment of the present invention.
Fig. 4 is a diagram showing the schematic configuration of a negligence rate determination server according to the embodiment of the present invention.
Fig. 5 is a table illustrating master data storing items necessary to determine a negligence rate.
Fig. 6 is a diagram showing the schematic configuration of an operator terminal shown in Fig. 1.
Fig. 7 is a flowchart showing the operation of the accident detection server according to the embodiment of the present invention.
Fig. 8 is a schematic diagram illustrating a traveling situation detail screen displayed on the operator terminal.
Fig. 9 is a schematic diagram illustrating a traveling situation detail screen displayed on the operator terminal.
Fig. 10 is a schematic diagram illustrating an accident situation screen displayed on the operator terminal.
Fig. 11 is a flowchart showing the operation of the negligence rate determination server according to the embodiment of the present invention.
Fig. 12 is a schematic diagram illustrating a negligence rate determination screen displayed on the operator terminal.
Fig. 13 is a schematic diagram illustrating a traveling information detail screen displayed on the operator terminal.
Fig. 14 is a schematic diagram illustrating a law information display screen displayed on the operator terminal.
Fig. 15 is a schematic diagram illustrating a determination report display screen displayed on the operator terminal.

### Description of Embodiments

Hereinafter, an embodiment of the present invention will be described in detail with reference to the drawings. Note that the same elements will be denoted by the same reference signs and their duplicated descriptions will be omitted.

### Embodiment

### (1) Configuration of Embodiment

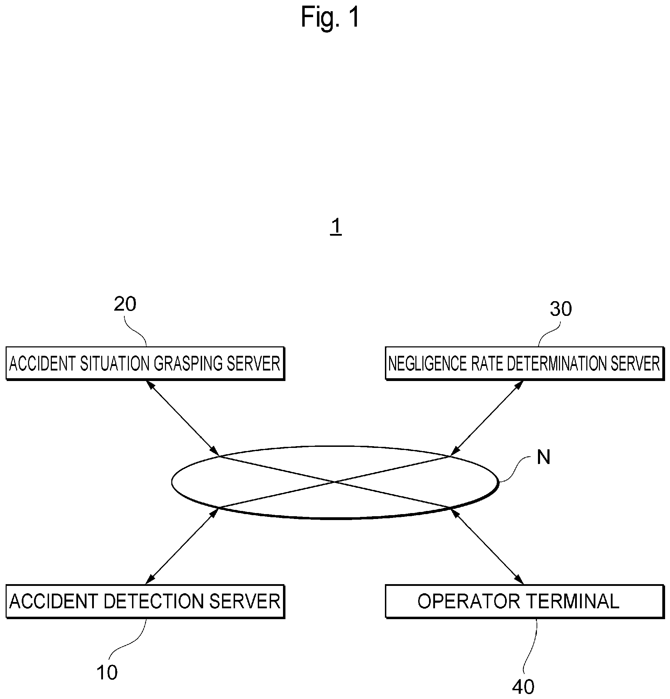

Fig. 1 is a diagram showing the schematic configuration of an accident handling system according to the embodiment of the present invention. An accident handling system 1 according to the present embodiment assumes use by a nonlife insurance company that sells automobile insurance. As shown in Fig. 1, the accident handling system 1 includes an accident detection server 10, an accident situation grasping server 20, a negligence rate determination server 30, and an operator terminal 40. The accident detection server 10, the accident situation grasping server 20, the negligence rate determination server 30, and the operator terminal 40 are connected to each other via a communication network N. Note that the operator terminal 40 is only singly shown in Fig. 1. However, a plurality of operator terminals 40 may be provided. Further, the accident detection server 10, the accident situation grasping server 20, and the negligence rate determination server 30 are singly shown in Fig. 1. However, these servers may be constituted by single hardware, or each of the servers may be constituted by a plurality of hardware. An operator may be called a user.

The communication network N includes a communication network that enables the mutual transmission and reception of information between the accident detection server 10, the accident situation grasping server 20, the negligence rate determination server 30, and the operator terminal 40. The communication network N may be any of, for example, the Internet, a LAN, an exclusive line, a telephone line, an in-house network, a movable-body communication network, a Bluetooth (registered trademark), a Wi-Fi (registered trademark) (Wireless Fidelity), other communication lines, their combinations, or the like, and may be in a wired or wireless form.

Each of the accident detection server 10, the accident situation grasping server 20, and the negligence rate determination server 30 is constituted by, for example, a computer having high arithmetic processing performance, and realizes, after the occurrence of an automobile accident, the server function of handling information on the accident such as reporting the accident, grasping an accident situation, and determining a negligence rate in cooperation with other servers and the operator terminal 40 by performing a prescribed program. Here, the automobile accident includes a contact between an automobile and other objects, and such objects include objects such as automobiles, bikes, motorcycles, persons, animals, electric poles, and walls.

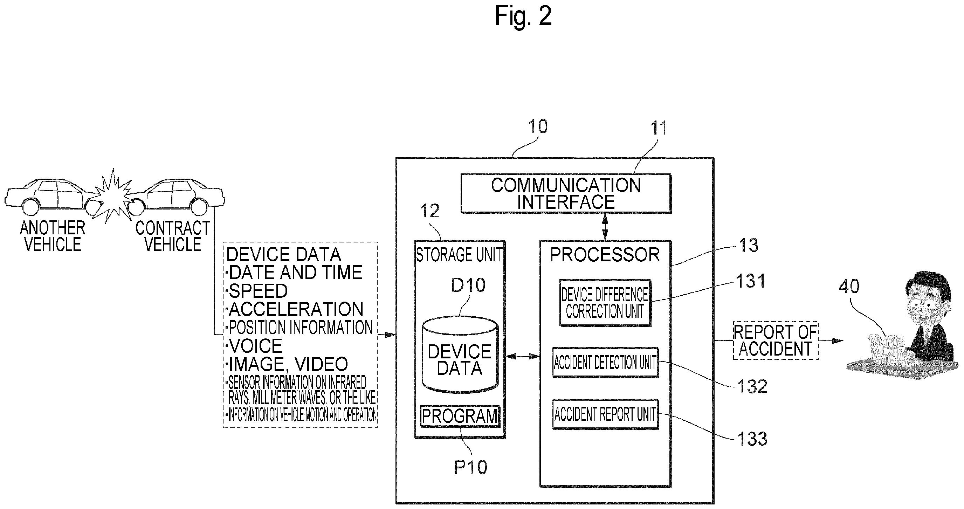

Fig. 2 is a diagram showing the schematic configuration of the accident detection server 10. The accident detection server 10 is an information processing apparatus that acquires various data from devices of an automobile or the like, detects the occurrence of an accident on the basis of the acquired data, and makes a necessary report. Note that the accident detection server 10 does not necessarily have to acquire various data from a plurality of automobiles but may only acquire various data from devices of at least one automobile.

Here, the devices of the automobile or the like include a calendar that detects the date and time, sensors such as a speed sensor that detects a traveling speed, an acceleration sensor that detects acceleration, and a GPS sensor that detects a position, and any of a communication function, a voice recording function, a video recording function, and the function of detecting the operations and motions of a sensor that measures millimeter waves, infrared rays, or the like and other automobile equipment, and acquire information with the various sensors at any time. The devices of the automobile or the like transmit the information (hereinafter called device data) acquired by the respective sensors at any time or at the occurrence of an unusual situation such as when acceleration changes by a prescribed value or more to the accident detection server 10 using a communication function.

As shown in Fig. 2, the accident detection server 10 includes a communication interface 11, a storage unit 12, and a processor 13.

The communication interface 11 is a hardware module used to connect the accident detection server 10 to the communication network N to communicate with other terminals on the communication network N. The communication interface 11 is, for example, a modulation and demodulation device such as an ISDN modem, an ADSL modem, a cable modem, an optical modem, and a soft modem.

The storage unit 12 is, for example, a logical device provided by a storage area of a physical device constituted by a non-transitory computer-readable storage medium such as a disk drive and a semiconductor memory (such as a ROM and a RAM). The storage unit 12 may be constructed by mapping a plurality of physical devices into one logical device, or may be constructed by mapping one physical device into a plurality of logical devices. The storage unit 12 stores various programs including an operating system program or a driver program and various data used when these programs are being performed. Specifically, the storage unit 12 stores various programs P10 caused to be performed by the processor 13 and device data D10 acquired from devices.

The processor 13 is constituted by an arithmetic and logic operation unit (such as a CPU) that processes arithmetic operation, logical operation, bit operation, or the like and various registers, and mainly controls the respective units of the accident detection server 10 by performing various programs stored in the storage unit 12. The various registers include, for example, a program counter, a data register, an instruction register, a general-purpose register, or the like. Further, the processor 13 realizes the accident detection function of detecting the occurrence of an accident and making a necessary report by performing the programs P10. A function unit realized when the processor 13 performs the programs P10 includes a device difference correction unit 131, an accident detection unit 132, and an accident report unit 133.

The device difference correction unit 131 corrects device data received from respective devices. Here, the device data transmitted from the respective devices has individual characteristics (such as sensor characteristics and different data formats). Therefore, the device difference correction unit 131 corrects the received device data into data capable of being input to an algorithm performed by the accident detection unit 132.

The accident detection unit 132 detects an accident by detecting characteristics at the occurrence of an accident from device data received from devices according to an algorithm constructed on the basis of past accident data or device data.

The accident report unit 133 reports information indicating that a possibility that an accident has occurred is high to the operator terminal 40 via the communication network N and causes an alert to be displayed when the accident detection unit 132 detects the accident.

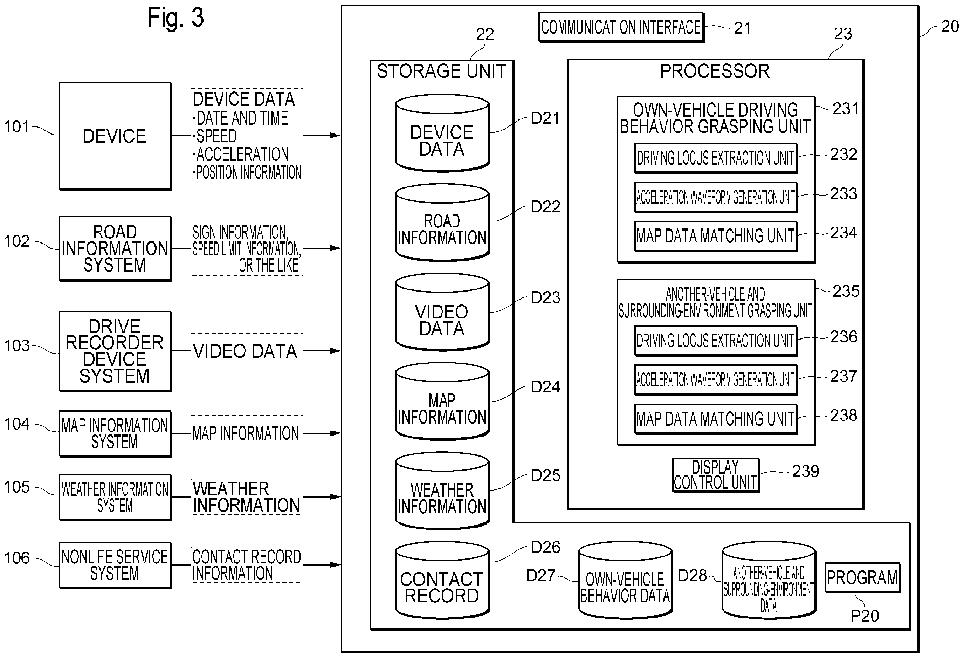

Fig. 3 is a diagram showing the schematic configuration of the accident situation grasping server 20. The accident situation grasping server 20 is an information processing apparatus that assists grasping of an accident situation by acquiring necessary information from various systems and visualizing an accident when the accident occurs.

The accident situation grasping server 20 acquires information illustrated below, besides device data acquired from devices that have caused an accident.
(a) Road information such as sign information and speed limit information: road information is acquired from a road information system 102 managed by a private company.
(b) Video data shot by a drive recorder: video data shot by a drive recorder installed in a device of a party to the accident is acquired. The video data may be directly acquired from the device of the party to the accident, or may be acquired from a drive recorder device system 103 managed by a private service company. Further, video data shot by a drive recorder installed in a device that had traveled around an accident occurrence place at the occurrence of the accident may be acquired from the drive recorder device system 103.
(c) Map information: map information is acquired from a map information system 104 managed by a private company.
(d) Weather information: weather information is acquired from a weather information system 105 managed by a private company or a public agency.
(e) Contact record information: a past contact record is acquired from a nonlife service system 106 when the party to the accident is an insurance contractor of one's company.

As shown in Fig. 3, the accident situation grasping server 20 includes a communication interface 21, a storage unit 22, and a processor 23. The hardware configurations of the communication interface 21, the storage unit 22, and the processor 23 are the same as those of the communication interface 11, the storage unit 12, and the processor 13 described above.

The storage unit 22 stores various programs P20 caused to be performed by the processor 23, device data D21 acquired from respective devices, road information D22 acquired from the road information system 102, video data D23 acquired from the drive recorder device system 103, map information D24 acquired from the map information system 104, weather information D25 acquired from the weather information system 105, a contact record D26 acquired from the nonlife service system 106, own-vehicle behavior data D27 analyzed by the processor 23 that will be described later, and another-vehicle and surrounding-environment data D28.

The processor 23 realizes the function of analyzing and visualizing an accident situation on the basis of acquired various information to assist grasping of the accident situation by performing the programs P20. A function unit realized when the processor 23 performs the programs P20 includes an own-vehicle driving behavior grasping unit 231, an another-vehicle and surrounding-environment grasping unit 235, and a display control unit 239.

The own-vehicle driving behavior grasping unit 231 grasps information on the driving behavior of an own vehicle at the occurrence of an accident on the basis of acquired various information, and stores the grasped information as the own-vehicle behavior data D27. As a specific example, the own-vehicle driving behavior grasping unit 231 grasps an accident situation such as a driving locus and speed information on the own vehicle by referring to the road information D22, the map information D24, the weather information D25, and the contact record D26 around an accident occurrence place on the basis of data acquired from devices (the own vehicle) driven by an insurance contractor of one's company. The own-vehicle driving behavior grasping unit 231 includes a driving locus extraction unit 232, an acceleration waveform generation unit 233, and a map data matching unit 234.

The driving locus extraction unit 232 extracts a driving locus of an own vehicle on the basis of the device data D21 acquired from the own vehicle. The acceleration waveform generation unit 233 specifies the behavior, a collision spot, or the like of the own vehicle by visualizing waveform data of acceleration in the own vehicle as a graph on the basis of the device data D21. The map data matching unit 234 visualizes a driving locus by matching the driving locus extracted by the driving locus extraction unit 232 to the road information D22 and the map information D24 around an accident occurrence place to be displayed in a superposed state.

The another-vehicle and surrounding-environment grasping unit 235 grasps information on the driving behavior of another vehicle or information on surrounding environments on the basis of acquired various data, and stores the grasped information as another-vehicle and surrounding-environment data D28. As a specific example, the another-vehicle and surrounding-environment grasping unit 235 estimates the speed of another vehicle by performing object recognition processing, depth measurement processing, or the like on video data shot by an own vehicle among the video data D23 and matching the same with own-vehicle behavior data. Further, the another-vehicle and surrounding-environment grasping unit 235 acquires information on a traffic signal state or the like at the occurrence of an accident from the video data D23. The another-vehicle and surrounding-environment grasping unit 235 includes a driving locus extraction unit 236, an acceleration waveform generation unit 237, and a map data matching unit 238. The operations of these respective units are the same as those of the own-vehicle driving behavior grasping unit 231 described above.

The display control unit 239 performs display control to display the driving behavior of an own vehicle grasped by the own-vehicle driving behavior grasping unit 231, the driving behavior of another vehicle grasped by the another-vehicle and surrounding-environment grasping unit 235, or surrounding environments on the operator terminal 40 in a visualized state.

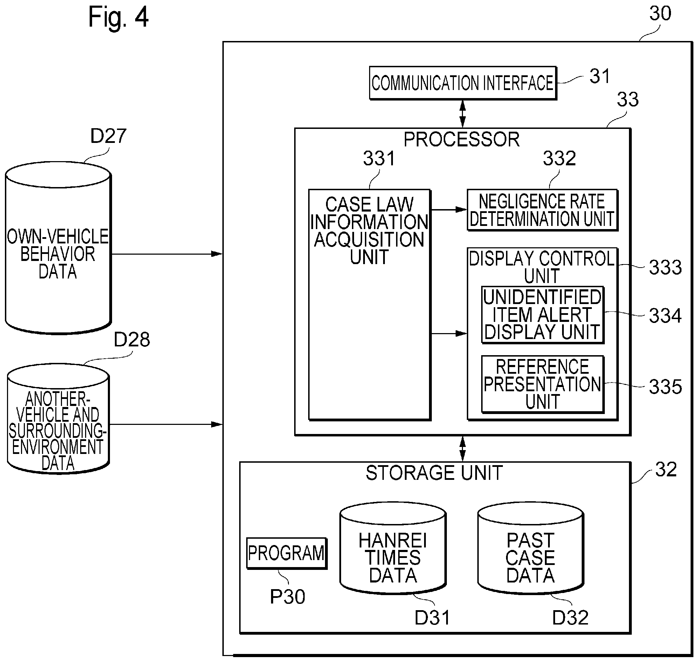

Fig. 4 is a diagram showing the schematic configuration of the negligence rate determination server 30. The negligence rate determination server 30 is an information processing apparatus that acquires the own-vehicle behavior data D27 and the another-vehicle and surrounding-environment data D28 stored by the accident situation grasping server 20, and that determines a negligence rate on the basis of the acquired data.

As shown in Fig. 4, the negligence rate determination server 30 includes a communication interface 31, a storage unit 32, and a processor 33. The hardware configurations of the communication interface 31, the storage unit 32, and the processor 23 are the same as those of the communication interface 11, the storage unit 12, and the processor 13 described above.

The storage unit 32 stores various programs P30 caused to be performed by the processor 33, law data D31 used to determine a negligence rate, and past case data D32. The law data D31 is data obtained by compiling the standards of negligence rates based on a law like, for example, "Minji-Sosho Ni Okeru Kashitusousai-ritsu No Nintei Kijun" (recognition standards of comparative negligence in civil traffic suit) (Hanrei Times (registered trademark) (Law Times Report)) issued by Hanrei Times Co., Ltd. into a database. Further, the past case data D32 is data obtained by compiling negligence rates in past cases into a database.

The processor 33 realizes the function of determining a negligence rate on the basis of the own-vehicle behavior data D27 and the another-vehicle and surrounding-environment data D28 by performing the programs P30. A function unit realized when the processor 33 performs the programs P30 includes a law information acquisition unit 331, a negligence determination unit 332, and a display control unit 333.

The law information acquisition unit 331 checks the own-vehicle behavior data D27 and the another-vehicle and surrounding-environment data D28 against the law data D31 to specify a corresponding law (accident classification). The negligence determination unit 332 determines a basic negligence rate on the basis of a law specified by the law information acquisition unit 331, and corrects the basic negligence rate according to an instruction based on a user operation performed on the operator terminal 40.

The display control unit 333 performs control to display a negligence rate determination screen including a determination result or the like by the negligence determination unit 332 on the operator terminal 40. The display control unit 333 includes an unidentified item alert display unit 334 and a reference presentation unit 335.

The unidentified item alert display unit 334 performs display control to issue an alert when there is any item that has not been identified by an operator among items necessary to determine a negligence rate or items possibly having influence on the negligence rate (hereinafter called determination items). Fig. 5 is a table illustrating master data storing the determination items. The master data shown in Fig. 5 stores the determination items so as to be divided into categories such as own-vehicle behavior, a road situation, an accident situation, and another-vehicle behavior. The respective determination items are linked to data sources on information associated with the determination items (for example, device data such as acceleration information and GPS information, map information, video data shot by a drive recorder, or the like).

The reference presentation unit 335 performs display control to cause an operator to refer to documents such as laws and past cases which correspond to (or of which the situation is similar to) an accident concerned. As described above, it is possible to determine a negligence rate efficiently and with high fairness on the basis of various data acquired at the occurrence of an accident according to the negligence rate determination server 30. Further, it is possible for an operator to efficiently and easily understand the grounds or the like for determining a negligence rate since the grounds or the like for determining the negligence rate are visualized according to the negligence rate determination server 30.

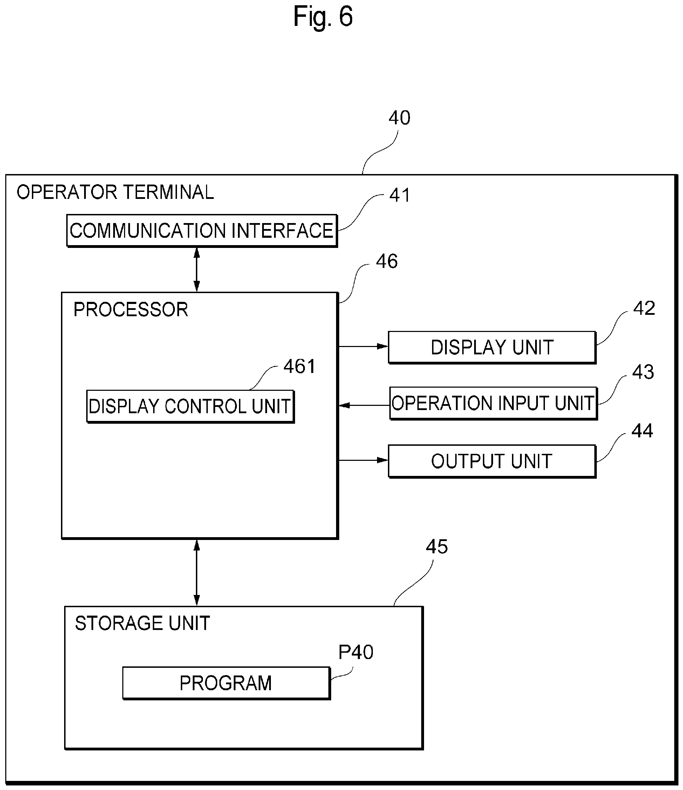

Fig. 6 is a diagram showing the schematic configuration of the operator terminal 40. The operator terminal 40 is a terminal that receives a report of an accident or is used by an operator who handles insurance or the like, and is constituted by a personal computer (PC), a notebook PC, a tablet terminal, or the like.

As shown in Fig. 6, the operator terminal 40 is an information processing apparatus including a communication interface 41, a display unit 42, an operation input unit 43, an output unit 44, a storage unit 45, and a processor 46. In the present embodiment, the operator terminal 40 is used not only as a display apparatus that displays a prescribed screen on the basis of information received from the accident situation grasping server 20 and the negligence rate determination server 30 but also as an operation input apparatus that receives the input of a request, an instruction, or the like to the accident situation grasping server 20 and the negligence rate determination server 30.

The communication interface 41 is a hardware module used to connect the operator terminal 40 to the communication network N to communicate with other terminals on the communication network N. The communication interface 41 is, for example, a modulation and demodulation device such as an ISDN modem, an ADSL modem, a cable modem, an optical modem, and a soft modem.

The display unit 42 is constituted by, for example, a liquid crystal display.

The operation input unit 43 is an input device including a keyboard, various operation buttons, a touch panel provided in the display unit 42, and a pointing device such as a mouse.

The output unit 44 is an output device such as a printer.

The storage unit 45 is, for example, a logical device provided by a storage area of a physical device. The physical device is, for example, a non-transitory computer-readable storage medium such as a disk drive and a semiconductor memory (such as a ROM and a RAM). The storage unit 45 may be constructed by mapping a plurality of physical devices into one logical device, or may be constructed by mapping one physical device into a plurality of logical devices. Further, the storage unit 45 may be a USB memory, an SD (registered trademark) card, or the like.

The storage unit 45 stores an operating system program, a driver program, various data, or the like. More specifically, the storage unit 45 stores programs P40 that are performed by the processor 46 to communicate with the accident situation grasping server 20 or the negligence rate determination server 30 and cause information transmitted from these servers to be displayed on the display unit 42 in a prescribed format.

The processor 46 is constituted by an arithmetic and logic operation unit (such as a CPU) that processes arithmetic operation, logical operation, and bit operation and various registers, and mainly controls the respective units of the operator terminal 40 by performing various programs stored in the storage unit 45. The various registers include, for example, a program counter, a data register, an instruction register, a general-purpose register, or the like. A function unit realized when the processor 46 performs the programs P40 includes a display control unit 461 that causes information transmitted from the accident situation grasping server 20 or the negligence rate determination server 30 to be displayed on the display unit 42 in a prescribed format.

Further, when an operation is performed by a user through the operation input unit 43, the processor 46 outputs an instruction corresponding to the user operation to the respective units of the operator terminal 40 to cause processing to be performed. In addition, when a user operation is performed on a screen transmitted from the accident situation grasping server 20 or the negligence rate determination server 30 during access to the accident situation grasping server 20 or the negligence rate determination server 30 by the operator terminal 40, the processor 46 transmits a signal indicating an instruction corresponding to the user operation to the accident situation grasping server 20 or the negligence rate determination server 30 to request for executing the instruction.

### (2) Operation According to Embodiment

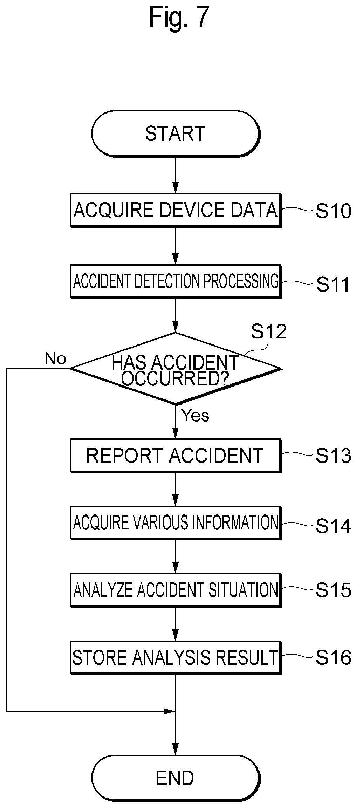

Fig. 7 is a flowchart showing the operation of the accident detection server 10.

When device data is transmitted with the occurrence of an accident, the accident detection server 10 acquires the device data (step S10) and analyzes the acquired device data to perform accident detection processing (see step S11 and Fig. 1).

When determining that the accident has occurred (Yes in step S12), the accident detection server 10 reports the accident to the operator terminal 40 (step S13). In contrast, when the accident detection server 10 determines that the accident has not occurred (No in step S12), the processing ends.

After the report of the accident, the accident situation grasping server 20 acquires various information associated with the accident such as device data transmitted from devices of a party to the accident, road information, video data, map information, weather information, and contact record information (see step S14 and Fig. 2). Next, the accident situation grasping server 20 analyzes the accident on the basis of the acquired information (step S15). Then, the accident situation grasping server 20 stores an analysis result (step S16).

The analysis result stored in the accident situation grasping server 20 is transmitted to the operator terminal 40 in response to a request from the operator terminal 40 and displayed in a prescribed format. An operator is allowed to cause information on the accident in which a contractor concerned becomes the party to be displayed on the operator terminal 40 by, for example, searching for the information with an insurance policy number or transferring the information from another system having contractor information.

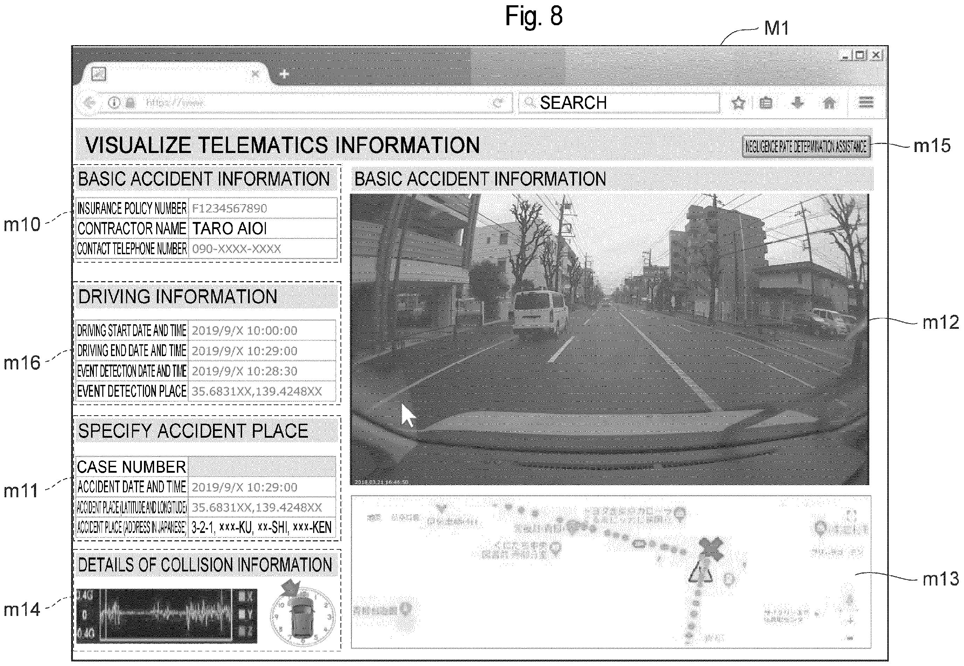

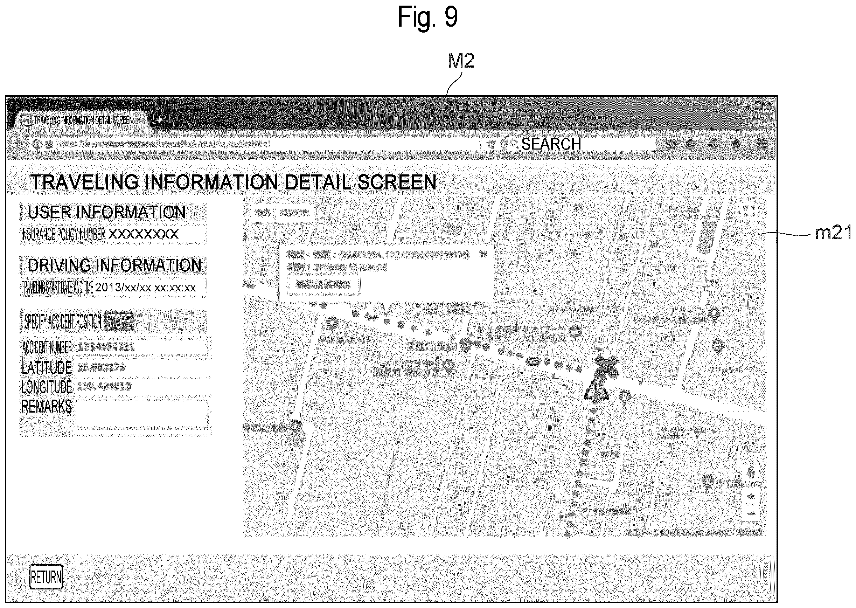

Figs. 8 and 9 are schematic diagrams illustrating screens displayed on the operator terminal 40. Fig. 8 is a schematic diagram illustrating a traveling situation detail screen. Fig. 9 is a schematic diagram illustrating a traveling situation detail screen.

A traveling information detail screen M1 shown in Fig. 8 includes: a user information display area m10 in which information on an insurance contractor is displayed; an accident place display area m11 in which information indicating an accident occurrence place is displayed; an image display area m12 in which video shot by a drive recorder of an own vehicle is displayed; a locus display area m13 in which a driving locus of the own vehicle is displayed; an impact information display area m14 in which acceleration detected by an acceleration sensor is displayed as a waveform graph; a negligence rate determination assist button m15; and a driving information display area m16 in which driver's driving information is displayed. The impact information display area m14 is provided with an input spot display area indicating a spot at which impact is input to the own vehicle. In the input spot display area, the own vehicle is displayed to be superposed on a clock with its front side oriented in the 12 o'clock direction, and an input direction of the impact (that is, a contact spot of another vehicle) is marked. Thus, since an input spot of impact is expressed in terms of a clock position of a clock in the insurance industry, it is possible to easily and visually grasp an impact direction using the input spot display area.

When a prescribed user operation (for example, a pointing operation with a mouse) is performed on the locus display area m13, a new tab or a window opens, whereby the traveling information detail screen M2 shown in Fig. 9 is displayed.

A traveling information detail screen M2 shown in Fig. 9 is provided with an enlarged locus display area m21.

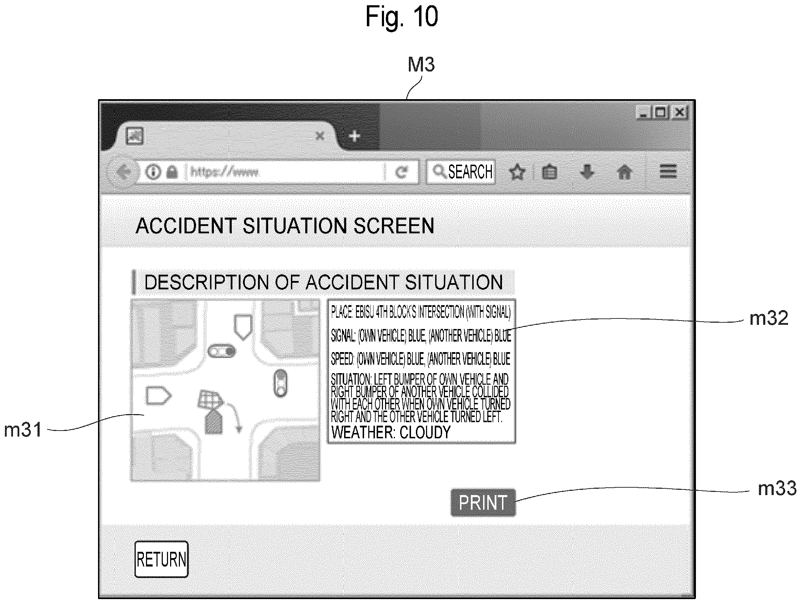

When a prescribed user operation is performed on the locus display area m21 (for example, when a pointing operation is performed in the vicinity of the accident occurrence place), a new tab or a window opens, whereby an accident situation screen M3 shown in Fig. 10 is displayed.

The accident situation screen M3 shown in Fig. 10 is provided with an animation display area m31 in which an accident situation is explained by animation and a text display area m32 in which the accident situation is explained by text. Further, when a prescribed user operation is performed on a print button (not shown) inside the accident situation screen M3, the output unit 44 is allowed to generate a hard copy of the accident situation screen M3.

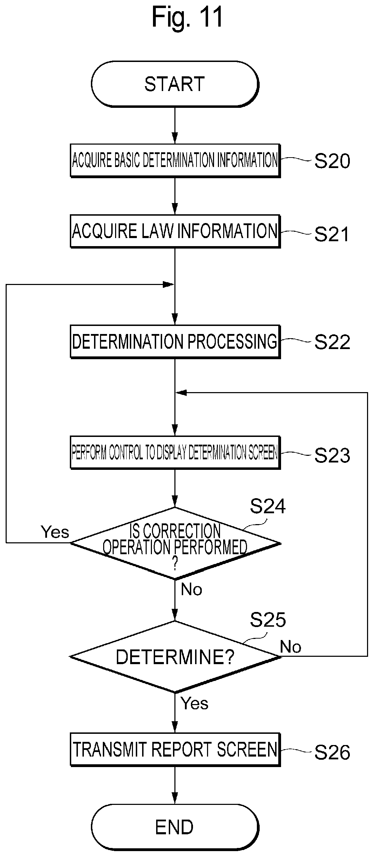

Fig. 11 is a flowchart showing the operation of the negligence rate determination server 30. When receiving the input of a signal instructing for the determination of a negligence rate about a specific accident from the operator terminal 40, the negligence rate determination server 30 acquires basic determination information (step S20). Here, the basic determination information represents information acquired about the accident concerned among information on the respective determination items shown in Fig. 5. Further, the negligence rate determination server 30 acquires law information on the basis of the acquired basic determination information (step S21).

Next, the negligence rate determination server 30 performs determination processing to determine the negligence rate about the accident concerned by checking the basic determination information against the law information (step S22). Then, the negligence rate determination server 30 performs control to transmit a determination result to the operator terminal 40 to cause a determination screen to be displayed in a prescribed format (step S23).

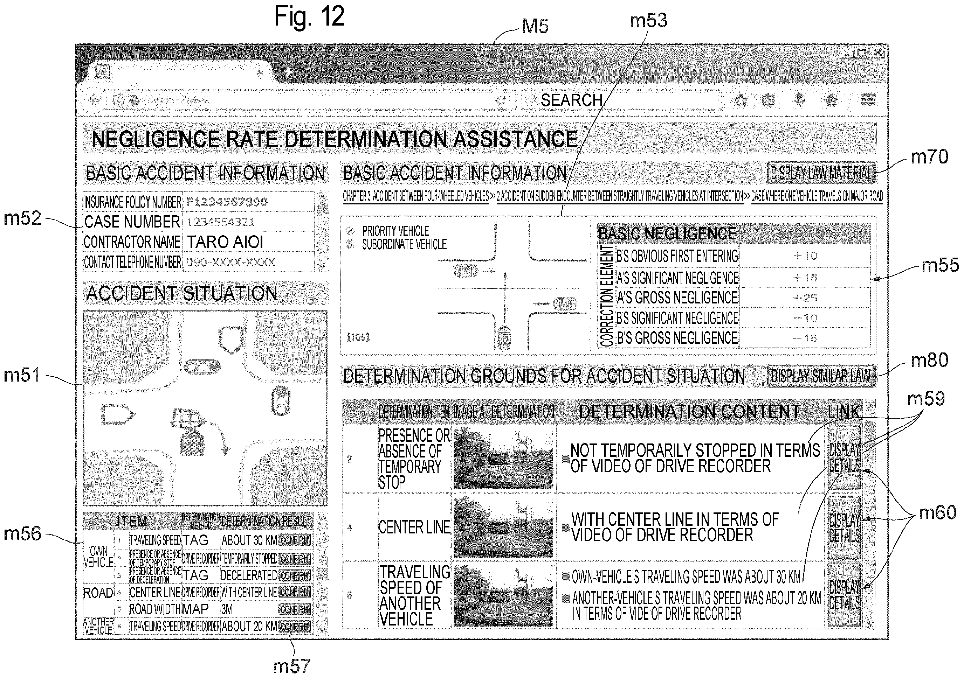

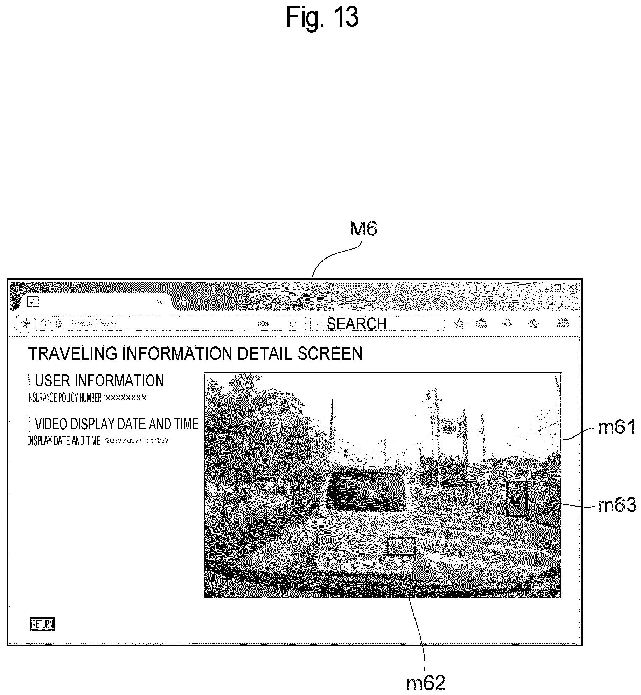

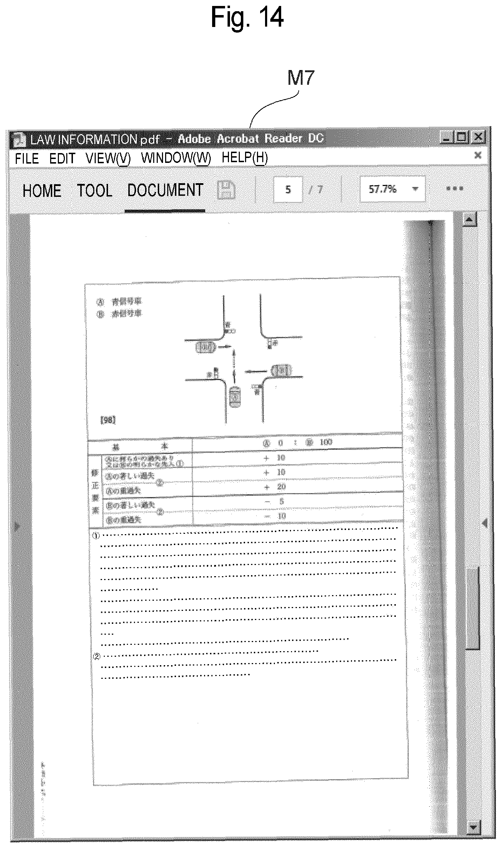

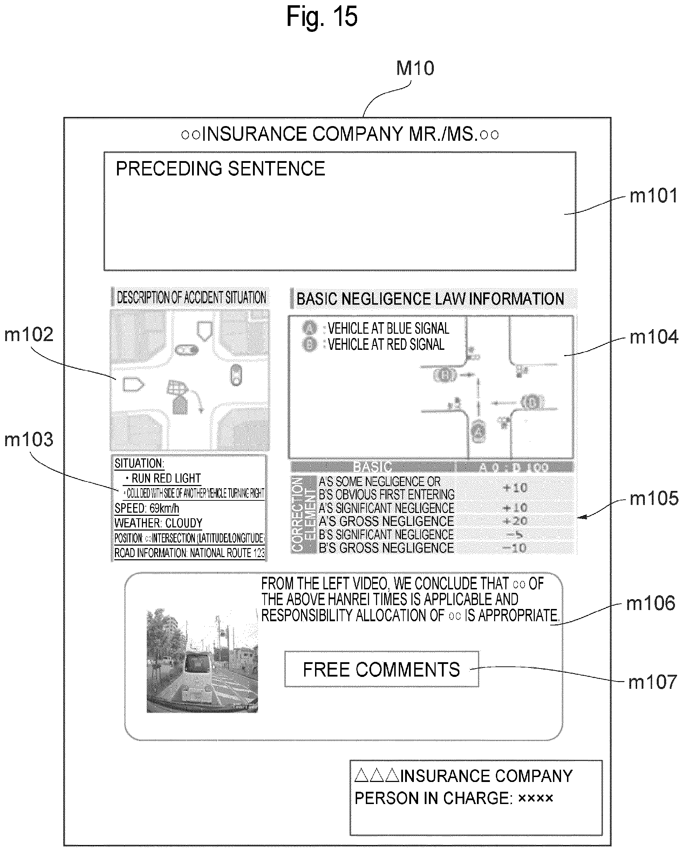

Figs. 12 to 15 are schematic diagrams illustrating screens displayed on the operator terminal 40. Fig. 12 is a schematic diagram illustrating a negligence rate determination screen. Fig. 13 is a schematic diagram illustrating a traveling information detail screen. Fig. 14 is a schematic diagram illustrating a law information display screen. Fig. 15 is a schematic diagram illustrating a determination report display screen.

A negligence rate determination screen M5 shown in Fig. 12 includes: an animation display area m51 in which an accident situation is explained by animation; a basic information display area m52 in which basic information on a person who has caused an accident is displayed; a determination information display column m53 in which an accident situation map (application map) in law information, for example, "Hanrei Times (registered trade mark)" applied to a negligence rate determination is displayed; a determination display column m55 in which a negligence rate and correction elements for correcting the negligence rate are displayed; a determination item display column m56 in which columns (determination columns) that must be considered to determine the negligence rate are displayed; a detail display column m59 for the determination items; a print button (not shown); a law material display button m70; and a similar law display button m80. In the determination information display column m53, a law detail display column m54, and the columns of the correction elements of the determination display column m55, information extracted from the law data D31 (see Fig. 4) is displayed. Note that in the negligence rate determination screen M5 shown in Fig. 12, the display of at least the determination item display column m56 and the detail display column m59 for the determination items makes it possible to objectively and easily grasp the determination of the accident situation. For example, when any confirmation button m57 inside the determination item display column m56 is operated (such as a click) by an operator, a detail display corresponding to the item is displayed in the detail display column m59. Further, when any detail display button m60 inside the detail display column m59 is operated (such as a click) by the user, objective proof data for the determination item, for example, a moving image captured by a driver recorder or the like is displayed.

The respective rows of the correction elements of the determination display column m55 are made selectable by a prescribed user operation with the operation input unit 43 (for example, a pointing operation with a mouse). When the row of any selection element is selected, a value for adjusting a negligence rate in the selected row is reflected in the negligence rate. For example, when the row of "significant negligence by A" is selected under a basic negligence rate of "A0:B100", correction is made to set a negligence rate by A at "+10", so that the negligence rate changes to "A10:B90".

The rows of the respective determination items of the determination item display column m56 are provided with a confirmation button m57 and a pull-down-type search condition selection button. When a prescribed user operation is performed on any confirmation button m57, the detail display column m59 for the determination items is automatically scrolled, whereby information on a determination item for which the confirmation button m57 has been operated is displayed. When there is any item for which a corresponding confirmation button m57 has not been operated among the determination items displayed in the determination item display column m56 (that is, when there is any determination item for which a corresponding detail has not been confirmed), an alert is issued to the operator through the highlighting or the like of the determination item concerned.

In the detail display column m59 for the determination items, facts based on which the negligence rate has been determined and proof images for proofing the facts are displayed in association with each other. In the detail display column m59 for the determination items, still images and text data associated with the respective determination items displayed in the determination item display column m56 are displayed in thumbnails. When a prescribed user operation is performed on any detail display button m60 displayed in the detail display column m59 for the determination items, a new tab or a window opens, whereby a traveling information detail screen M6 shown in Fig. 13 is displayed.

The traveling information detail screen M6 includes a moving-image display area m61 in which a moving image associated with a determination item concerned is reproduced. The moving image is an image extracted from video data shot by a drive recorder. Note that each of the still images displayed in the detail display column m59 for the determination items represents one frame inside the moving image. In the moving image displayed in the moving-image display area m61, spots associated with a determination result of the negligence rate are highlighted. In, for example, Fig. 12, a tail lamp (brake lamp) of a preceding vehicle and a bike traveling on a sidewalk are highlighted by frames m62 and m63 displayed in a superposed state, respectively.

Referring back to Fig. 12, when a prescribed user operation is performed on the law material display button m70 inside the negligence rate determination screen M5, a new tab or a window opens, whereby a law information display screen M7 shown in Fig. 14 is displayed. In the law information display screen M7, law information applied to a negligence rate determination on an accident concerned is displayed. Note that in Fig. 14, the page ×× of the ×× issue in Hanrei Times® is illustrated as an example of the law information.

Further, when a prescribed user operation is performed on the similar law display button m80 inside the negligence rate determination screen M5, a new tab or a window opens, whereby a similar law display screen (not shown) is displayed. In the similar law display screen, an accident situation map (application map) in law information on a case similar to a case concerned is displayed in a thumbnail.

When a prescribed user operation is performed on the application map inside the similar law display screen, a new tab or a window opens, whereby a law summary display screen (not shown) is displayed. In the law summary display screen, the selected application map, the main point of a judgement concerned, the abstract of the judgement, and a negligence rate determined in the judgement concerned are displayed.

Referring back to Fig. 11, the negligence rate determination server 30 causes the screens shown in Figs. 12 to 14 to be displayed on the operator terminal 40 according to a signal transmitted in response to an operation on the operator terminal 40 (step S23). Further, when a user operation to correct any determination item is performed on the operator terminal 40 (Yes in step S24), the negligence rate determination server 30 performs the determination processing to determine the negligence rate again according to a signal transmitted in response to the user operation (step S22).

When the operation to correct the determination item is not performed on the operator terminal 40 (No in step S24), the negligence rate determination server 30 determines whether an operation to determine the negligence rate has been performed on the operator terminal 40 (step S25). For example, when a signal indicating the fact that a prescribed user operation has been performed on the print button (not shown) inside the negligence rate determination screen M5 is sent from the operator terminal 40, the negligence rate determination server 30 determines that the operation to determine the negligence rate has been performed.

When the negligence rate has been determined (Yes in step S25), the negligence rate determination server 30 transmits a report screen to the operator terminal 40 to be displayed (step S26). On the other hand, when the negligence rate has not been determined (No in step S25), the negligence rate determination server 30 causes the determination screen to be continuously displayed on the operator terminal 40 (step S23).

When a prescribed user operation is performed on the print button (not shown) inside the negligence rate determination screen M5 in the operator terminal 40, a new tab or a window opens, whereby a determination report display screen M10 shown in Fig. 15 is displayed. The determination report display screen M10 includes: a preceding-sentence display column m101; an animation display area m102 in which an accident situation is explained by animation; a text display area m103 in which the accident situation is explained by text; a determination information display column m104 in which an application map on law information applied to a negligence rate determination is displayed; a determination display column m105 in which a basic negligence rate and correction elements are displayed; a determination result display column m106 in which the conclusion of the negligence rate determination is displayed; and a comment display column m107. The determination report display screen M10 is a report screen for disclosing a determination result of a negligence rate or its grounds to an insurance contractor or an insurance company of another party to an accident, and is printable.

As described above, it is possible to objectively and easily grasp an accident situation since the accident situation is visualized to be displayed on the basis of objective information according to the embodiment of the present invention. Further, an operator is allowed to easily grasp an accident situation since proof data for a determination item is displayed according to a user operation for the determination item. Further, according to the embodiment of the present invention, the operator is allowed to confirm efficient and objective information (for example, video data of a drive record) and determine a negligence rate with fairness. Particularly, since an accident situation is reproduced on the basis of not only subjective information such as verbal evidence by a concerned party or witnesses but also video data shot by a drive recorder of the vehicle of a concerned party or vehicles traveling around the vehicle of the concerned party, it is possible to determine a satisfactory negligence rate for the concerned party. In addition, it is possible to easily confirm an accident situation based on objective facts in an automobile accident, and is also possible to easily confirm a determination result of a negligence rate based on the accident situation concerned and its grounds.

Further, it is possible for a user (operator) to easily understand the logic of a negligence rate determination and easily correct a necessary element since law information applied to the negligence rate determination and facts based on which the law information is applied are displayed on the same screen according to the embodiment of the present invention.

### Modified Example

In the above embodiment, the negligence rate determination server 30 performs a negligence rate determination and various display control to cause a prescribed screen to be displayed on the operator terminal 40. However, the operator terminal 40 may perform a negligence rate determination and control to display a prescribed screen on a display device (display unit 42). In this case, after the installation of a program for the negligence rate determination and a program for the screen display control in the operator terminal 40, the own-vehicle behavior data D27 and the another-vehicle and surrounding-environment data D28 may only be downloaded from the accident situation grasping server 20 or the negligence rate determination server 30 to perform these programs.

### Reference Signs List

- 1: Accident handling system
- 10: Accident detection server
- 11, 21, 31, 41: Communication interface
- 12, 22, 32, 45: Storage unit
- 13, 23, 33, 46: Processor
- 20: Accident situation grasping server
- 30: Negligence rate determination server
- 40: Operator terminal
- 42: Display unit
- 43: Operation input unit
- 44: Output unit
- 101: Device
- 102: Road information system
- 103: Drive recorder device system
- 104: Map information system
- 105: Weather information system
- 106: Nonlife service system
- 131: Device difference correction unit
- 132: Accident detection unit
- 133: Accident report unit
- 231: Own-vehicle driving behavior grasping unit
- 232: Driving locus extraction unit
- 233: Acceleration waveform generation unit
- 234: Map data matching unit
- 235: Another-vehicle and surrounding-environment grasping unit
- 236: Driving locus extraction unit
- 237: Acceleration waveform generation unit
- 238: Map data matching unit
- 239, 333, 461: Display control unit
- 331: Law information acquisition unit
- 332: Negligence determination unit
- 334: Unidentified item alert display unit
- 335: Reference presentation unit

## Claims

1. A program that causes an information processing apparatus to perform processing to
receive a plurality of data used to determine an accident situation,
perform display control to display a determination screen on a display device on a basis of the plurality of data, the determination screen including a first display area in which a plurality of determination items and determination results for determining the accident situation are displayed and a second display area in which proof data is displayed in determination items having the proof data corresponding to the determination results,
receive an instruction based on a selection operation performed by a user on a prescribed determination result inside the first display area, and
perform display control to display proof data for the prescribed determination result inside the second display area according to the instruction.

2. The program according to claim 1, wherein,
when the proof data includes a moving image captured by an imaging device installed in a vehicle,
the program causes the information processing apparatus to further perform processing to
perform display control to display a still image that is a part of the moving image in association with the determination items.

3. The program according to claim 2, wherein
the program causes the information processing apparatus to further perform processing to
receive a second instruction based on a user operation performed on a prescribed still image inside the second display area, and
perform display control to display a reproduction screen to reproduce a moving image corresponding to the prescribed still image according to the second instruction.

4. The program according to claim 3, wherein
the moving image is different between the determination items.

5. The program according to claim 3 or 4, wherein
spots associated with the determination results are highlighted inside the moving image.

6. The program according to any one of claims 1 to 5, wherein,
when the determination items include an item showing a contact spot of an own vehicle at collision,
the program causes the information processing apparatus to further perform processing to
receive a third instruction based on a user operation performed on the item showing the contact spot, and
perform display control to display the vehicle to be superposed on a clock, display a front of the vehicle in a 12 o'clock direction, and display the contact spot on the vehicle according to the third instruction.

7. The program according to any one of claims 1 to 6, wherein
the program causes the information processing apparatus to further perform processing to
perform display control to display a third display area in which a basic negligence rate determined using the plurality of data and past law data is displayed on the determination screen together with a prescribed user interface (UI) component for displaying the law data,
receive a fourth instruction based on a user operation performed on the prescribed UI component, and
perform display control to display law data used to determine the basic negligence rate according to the fourth instruction.

8. The program according to any one of claims 1 to 7, wherein
the program causes the information processing apparatus to further perform processing to
perform display control to display a fourth display area in which map data for explaining the accident situation determined on the basis of the plurality of data is displayed on the determination screen.

9. The program according to any one of claims 1 to 7, wherein
the program causes the information processing apparatus to further perform processing to
receive a fifth instruction based on a user operation to correct the determination results, and
reflect the correction of the determination results according to the fifth instruction.

10. An information processing method which comprises the steps of:
receiving a plurality of pieces of data used to determine an accident situation;
performing display control to display a determination screen on a display device on a basis of the plurality of data, the determination screen including a first display area in which a plurality of determination items and determination results for determining the accident situation are displayed and a second display area in which proof data is displayed in determination items having the proof data corresponding to the determination results;
receiving an instruction based on a selection operation performed by a user on a prescribed determination result inside the first display area; and
performing display control to display proof data for the prescribed determination result inside the second display area according to the instruction.
